# EUROPEAN PATENT APPLICATION

(11) **EP 2 713 594 A1**
(43) Date of publication of application: **02.04.2014**
(21) Application number: 13156106.0
(22) Date of filing: 21.02.2013
(51) Int. Cl.: H04N 1/00, G06F 3/12, H04N 1/32

(54) **Image forming system, scanning apparatus having copy job function and method of performing copy job thereof**

(30) Priority: 26.09.2012 KR 20120107491
(71) Applicant: Samsung Electronics Co., Ltd, Gyeonggi-do 443-742 (KR)
(72) Inventor: Jeon, Wan-joon, Gyeonggi-do (KR); Yoon, Sun-joo, Seoul (KR)
(74) Representative: Hewett, Jonathan Michael Richard

(57) **Abstract**

A scanning apparatus having a function of a copy job scans a document to generate scan data, receives a printing option with respect to the scan data through a user interface screen, and provides state information of printing apparatuses connected via a network through the user interface image.

## Description

The present invention relates to an image forming system, a scanning apparatus having a copy job function and a method of performing a copy job by using the scanning apparatus.

There are various kinds of image forming apparatuses, such as printers, scanners, copy machines, and facsimile machines, and a multi-function product (MFP) that combines the functions of the printers, scanners, copy machines, and facsimile machines in a single apparatus. Recently, the image forming apparatuses have a connecting function through a network by including a network interface.

The present invention provides an image forming system, a scanning apparatus having a copy job function included in an image forming system, and a method of performing a copy job by using the scanning apparatus.

The present invention also provides a computer readable recording medium in which a program for executing the above method in a computer is recorded.

According to an aspect of the present invention, there is provided a scanning apparatus having a function of a copy job, the scanning apparatus including: a scanning unit that scans a document to generate scan data; a user interface unit that receives a printing option with respect to the scan data through a user interface image; a network interface unit that receives current state information of connected printing apparatuses from the printing apparatuses connected via a network when the printing option is inputted; and a control unit that determines at least one printing apparatus that supports the inputted printing option of the connected printing apparatuses based on the received state information, wherein the user interface unit provides the user interface image in which the determined at least one printing apparatus is distinguishingly displayed.

According to another aspect of the present invention, there is provided an image forming system including: a plurality of printing apparatuses each having a function of printing scan data; and at least one scanning apparatus connected to the printing apparatuses via a network, wherein the at least one scanning apparatus includes: a scanning unit that scans a document to generate scan data; a user interface unit that receives a printing option with respect to the scan data through a user interface image; a network interface unit that receives current state information of the connected printing apparatuses from the printing apparatuses connected via a network when the printing option is inputted; and a control unit that determines at least one printing apparatus that supports the inputted printing option among the connected printing apparatuses based on the received state information, wherein the user interface unit provides the user interface image in which the determined at least one printing apparatus is distinguishingly displayed.

According to another aspect of the present invention, there is provided a method of performing a copy job by using a scanning apparatus, the method including: receiving a printing option with respect to scan data through a user interface image; receiving current state information of connected printing apparatuses from the printing apparatuses that are connected via a network when the printing option is inputted; determining at least one printing apparatus that supports the inputted printing option among the printing apparatuses connected via the network based on the received state information; and providing the user interface image on which the determined at least one printing apparatus is distinguishingly displayed.

According to another aspect of the present invention, there is provided a computer readable recording medium in which programs for executing the method described above in a computer are recorded.

According to the embodiments of the present invention, when a copy job is performed in the scanning apparatus, the user may print on a specific desired printer. Also, the user may see printing apparatuses that support the desired printing options and the detailed specifications thereof through the user interface image. Therefore, the copy job may be readily performed without repeatedly performing unnecessary operations. Moreover, the user may rapidly and automatically perform a copy job in a printing apparatus that supports printing options.

The above and other features and advantages of the present invention will become more apparent by describing in detail exemplary embodiments thereof with reference to the attached drawings in which:
FIG. 1 is a configurational diagram showing an image forming system according to an embodiment;
FIG. 2 is a block diagram of a scanning apparatus according to an embodiment;
FIG. 3 is a screen-shot view showing a user interface image for selecting a job of a scanning apparatus according to an embodiment;
FIG. 4A is a screen-shot view showing a user interface image for setting a printing option when a scanning apparatus according to an embodiment performs a copy job;
FIG. 4B is a screen-shot view showing a user interface image for selecting a mode when a scanning apparatus according to an embodiment performs a copy job;
FIG. 5A is a screen-shot view showing a user interface image that displays a list of printing apparatuses for performing a copy job at a scanning apparatus according to an embodiment;
FIG. 5B is a screen-shot view showing a user interface image that displays a list of printing apparatuses that supports a printing option inputted by the user at a scanning apparatus according to an embodiment;
FIG. 6 is a screen-shot view showing a user interface image for selecting a printing apparatus and a tray that supports a paper source that is desired by a user at a scanning apparatus according to an embodiment;
FIG. 7 is a screen-shot view showing a user interface image provided to the user when a copy job starts at a scanning apparatus according to an embodiment;
FIG. 8 is a diagram showing a process of performing a copy job according to a manual select mode of a scanning apparatus according to an embodiment;
FIG. 9 is a diagram showing a process of performing a copy job according to an auto select mode of a scanning apparatus according to an embodiment;
FIG. 10 is a diagram showing a process of performing a copy job according to a broadcast mode of a scanning apparatus according to an embodiment; and
FIG. 11 is a flowchart view showing a method of performing a copy job by using a scanning apparatus according to an embodiment.

The embodiments now are described more fully with reference to the accompanying drawings.

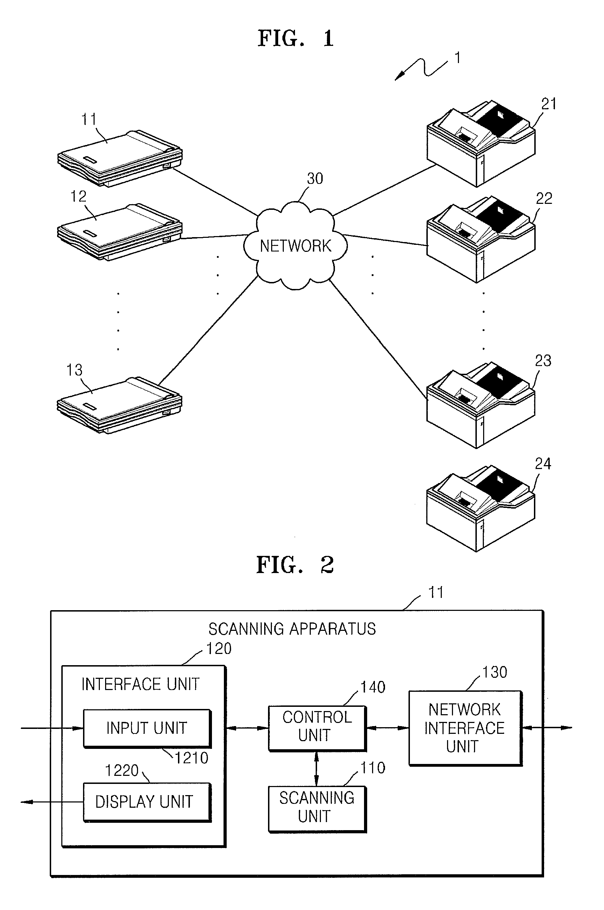

FIG. 1 is a configurational diagram showing an image forming system 1 according to an embodiment. Referring to FIG. 1, the image forming system 1 is configured in an atmosphere in which a plurality of scanning apparatuses 11, 12, and 13 and a plurality of printing apparatuses 21, 22, 23, and 24 are connected through a network 30. However, it will be understood by those skilled in the art that other general hardware constituent elements besides the hardware constituent elements depicted in FIG. 1 may be included in the image forming system 1 according to the present invention.

The numbers of the scanning apparatuses 11, 12, and 13 and the printing apparatuses 21, 22, 23, and 24 included in the image forming system 1 are not limited to those depicted in FIG. 1 but may vary. That is, the image forming system 1 denotes an atmosphere in which the scanning apparatuses 11, 12, and 13 and the printing apparatuses 21, 22, 23, and 24 are connected in a ratio of N:M (where N and M are natural numbers).

Each of the scanning apparatuses 11, 12, and 13 may correspond to apparatuses having scanning functions, and each of the printing apparatuses 21, 22, 23, and 24 may correspond to apparatuses having printing functions. However, the embodiment is not limited thereto, that is, the scanning apparatuses 11, 12, and 13 may correspond to apparatuses having various image forming functions including a scanning function, like multi-function printers (MFPs) or mobile terminals, such as mobile phones and PDAs having a scanning function (for example, a scanning application program etc.). Likewise, the printing apparatuses 21, 22, 23, and 24 may also correspond to apparatuses having various image forming functions including a printing function, like MFPs or mobile terminals, such as mobile phones and PDAs having a document reading function.

Each of the scanning apparatuses 11, 12, and 13 and each of the printing apparatuses 21, 22, 23, and 24 may correspond to apparatuses that operate independently by being physically separated from each other.

FIG. 2 is a block diagram of a scanning apparatus 11 according to an embodiment. Referring to FIG. 2, the scanning apparatus 11 includes a scanning unit 110, a user interface unit 120, a network interface unit 130, and a control unit 140. The user interface unit 120 includes an input unit 1210 and a display unit 1220. However, it will be understood by those skilled in the art that other general hardware constituent elements besides the hardware constituent elements depicted in FIG. 2 may be included in the scanning apparatus 11 according to the current embodiment.

Hereinafter, for convenience of explanation, the scanning apparatus 11 is mainly described. However, the description of the scanning apparatus 11 may be equally applied to the other scanning apparatuses 12 and 13.

After describing general operations and functions of the constituent elements of the scanning apparatus 11, the operations and functions of the constituent elements of the scanning apparatus 11 will be specifically described.

The scanning unit 110 scans a document for generating scan data. That is, the scanning unit 110 performs a function of scanning a document to be scanned by a user and generates scan data (for example, an image file, etc.). The process and operation of generating scan data in the scanning unit 110 are well known in the art, and thus, the detailed descriptions thereof will be omitted.

The user interface unit 120 is a hardware unit that plays a role of a medium for displaying information of the scanning apparatus 11 and for inputting an order to the scanning apparatus 11 by the user.

The input unit 1210 of the user interface unit 120 is a hardware element that may be realized in various forms according to products, and receives information from the user. For example, the input unit 1210 may be realized as a static/decompressive type touch screen, a key board, a mouse, or a physical button. In the current embodiment, for convenience of explanation, the input unit 1210 that is realized as a touch screen is described.

The display unit 1220 of the user interface unit 120 is a hardware element that may be realized in various ways. For example, the display unit 1220 may be realized in a simple type of 2 to 4 lines on a display, such as LCDs or LEDs, or may be realized in a graphical UI (GUI) so that various graphical expressions may be provided. In the current embodiment, for convenience of explanation, the display unit 1220 that is realized in a GUI type displayed on a touch screen is described.

The user interface unit 120 provides a menu image for setting an operation to be performed in the scanning apparatus 11 and a state image of operation that is performing in the scanning apparatus 11 through a user interface image. Also, the user interface unit 120 receives an input of the user with respect to a menu image displayed on the user interface image.

In particular, according to the current embodiment, the user interface unit 120 may provide apparatus information, specification information, and information of progressing work of the printing apparatuses 21, 22, 23, and 24 connected via a network 30 (refer to FIG. 1) in the image forming system 1 to the user through the user interface image.

The network interface unit 130 is a hardware unit corresponding to a network adaptor, such as a wire or wireless LAN card, and performs a communication function with a network 30 such as an internet network or an internal intranet by using a protocol such as TCP/IP. Accordingly, the network interface unit 130 may transmit scan data to a user's PC or a server connected to the scanning apparatus 11 by connecting to the network 30, and also, may transmit and receive data to and from other scanning apparatuses 12 and 13 and the printing apparatuses 21, 22, 23, and 24 connected to the scanning apparatus 11 via a network 30 in the image forming system 1.

The control unit 140 is a hardware unit corresponding to a central processing unit (CPU), and performs a function of controlling overall operation of the scanning apparatus 11. For example, the control unit 140 may control generation of scan data, may control transformation of the scan data to a format such as JPEG/TIFF/BIMTAP, or may control configuration of a user interface image to be displayed on the user interface unit 120.

In particular, according to the current embodiment, the control unit 140 may generate a control signal for controlling a printing job of the printing apparatuses 21, 22, 23, and 24 connected via a network 30 in the image forming system 1.

An operation and function of the scanning apparatus 11 according to the current embodiment by using the hardware configuration will be described.

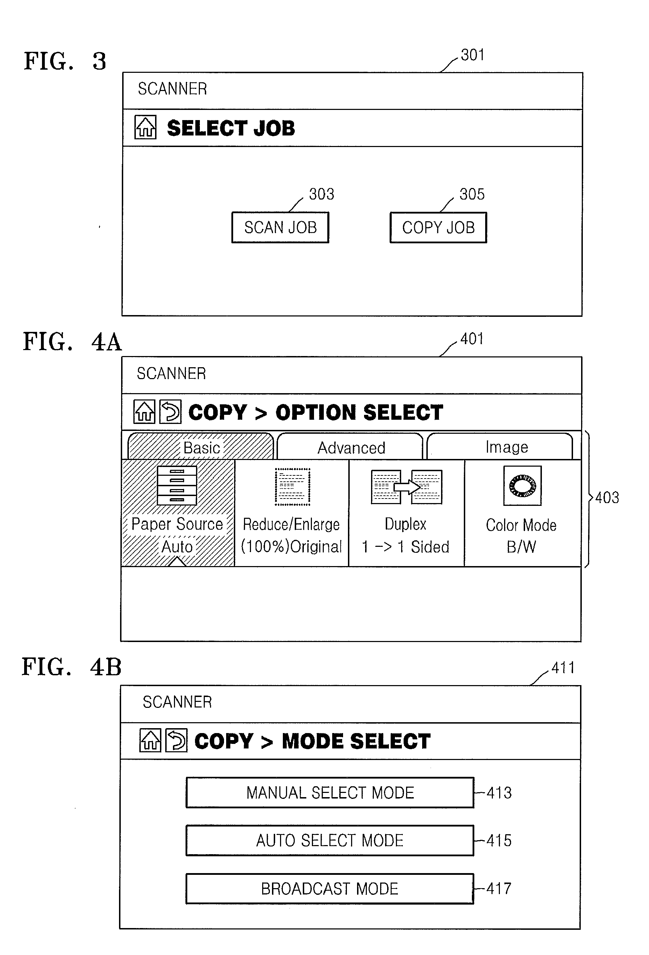

FIG. 3 is a screen-shot view showing a user interface image 301 for selecting a job of the scanning apparatus 11 according to an embodiment. However, the user interface image 301 of FIG. 3 is an example, and thus, it will be understood by those skilled in the art that the user interface image 301 may be modified in various ways.

The scanning apparatus 11 according to the current embodiment supports a scan job that scans a document by using the scanning unit 110 and a copy job that allows scan data to be copied by using the printing apparatuses 21, 22, 23, and 24 connected via a network 30 in the image forming system 1.

Referring to FIG. 3, the user interface unit 120 displays an icon 303 for performing a scan job and an icon 305 for performing a copy job through the user interface image 301. Also, the user interface unit 120 receives an input of one of the icon 303 and the icon 305 selected by the user to perform a desired job.

When scan data generated in the scanning apparatus 11 is printed by using the printing apparatuses 21, 22, 23, and 24 in the image forming system 1, the user may select and input the icon 305 for performing a copy job.

FIG. 4A is a screen-shot view showing a user interface image 401 for setting a printing option 403 when a scanning apparatus 11 according to an embodiment performs a copy job. However, the user interface image 401 of FIG. 4A is an example, and thus, it will be understood by those skilled in the art that the user interface image 401 may be modified in various ways.

When the user selects the icon 305 for performing a copy job in FIG. 3, the scanning apparatus 11 receives an input from the user through the user interface image 401 regarding which printing option will be applied to scan data for printing.

The scanning apparatus 11 according to the current embodiment may perform a copy job with general printing options, such as paper sources, enlarge/reduce printing, color/mono printing, and duplex printing. That is, other printing options besides the printing options 403 depicted in FIG. 4A may be applied.

Referring to FIG. 4A, the user interface unit 120 displays icons for setting a printing option 403, such as paper sources, reduce/enlarge printing, duplex printing, and color mode printing through the user interface image 401. Afterwards, the user interface unit 120 receives an input of selection of icons related to the printing option 403 to be performed by the user.

FIG. 4B is a screen-shot view showing a user interface image 411 for selecting a mode when the scanning apparatus 11 according to an embodiment performs a copy job. However, the user interface image 411 of FIG. 4B is an example, and thus, it will be understood by those skilled in the art that the user interface image 411 may be modified in various ways.

When the user selects the icon 305 in FIG. 3 for performing a copy job, the scanning apparatus 11 receives an input from the user through the user interface image 411 regarding which mode will be applied to a copy job.

The scanning apparatus 11 according to the current embodiment may perform a copy job with one of a manual selection mode, an auto selected mode, and a broadcast mode as a mode for the copy job.

In the manual mode, all settings to be selected by the user are directly received from the user before a copy job begins. For example, the settings to be selected by the user may be the selection of a printing apparatus, a tray included in the printing apparatus, etc.

In the auto select mode, a copy job is performed according to a sequence that is set in advance when a copy job begins without the need of directly receiving settings from the user.

Finally, in the broadcast mode, a copy job is automatically performed at all printing apparatuses connected via the network 30.

Referring to FIG. 4B, the user interface unit 120 displays an icon 413 for performing the manual select mode, an icon 415 for performing the auto select mode, and an icon 417 for performing the broadcast mode through the user interface image 411. Afterwards, the user interface unit 120 receives an input of selection of an icon of the icons 413, 415, and 417 that is related to a mode to be performed by the user.

When a copy job is selected through the user interface image 301 of FIG. 3, the sequence of displaying the user interface image 401 of FIG. 4A and the user interface image 411 of FIG. 4B may be changed. In other words, after setting the printing option 403 in advance through the user interface image 401 of FIG. 4A, the mode for a copy job may be set through the user interface image 411 of FIG. 4B. On the contrary, after a mode for performing a copy job is set through the user interface image 411, the printing option 403 may be set through the user interface image 401 of FIG. 4A. That is, it will be understood by those skilled in the art that the sequence of settings is not limited to any specific sequence.

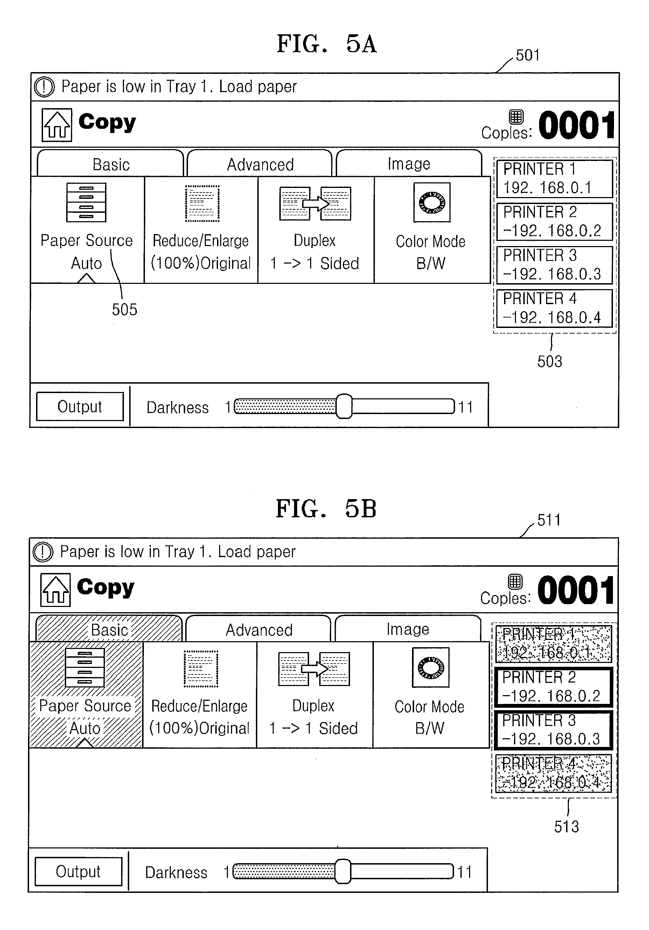

FIG. 5A is a screen-shot view showing a user interface image 501 that displays a list of the printing apparatuses 21, 22, 23, and 24 for performing a copy job at a scanning apparatus 11 according to an embodiment. However, the user interface image 501 of FIG. 5A is an example, and thus, it will be understood by those skilled in the art that the user interface image 501 may be modified in various ways in consideration of an available atmosphere.

Referring to FIG. 5A, when the user selects a printing option and a mode through the user interface images 401 and 411 of FIGS. 4A and 4B, the scanning apparatus 11 displays a list 503 of all printing apparatuses 21, 22, 23, and 24 (printers 1, 2, 3, and 4 of FIG. 5A) connected via the network 30 through the user interface image 501. Here, the user interface image 501 of FIG. 5A displays a case when a paper source 505 is selected as a printing option.

However, as depicted in FIG. 5A, when the list 503 of all printing apparatuses 21, 22, 23, and 24 is displayed, the user should find a printing apparatus one by one that supports the printing option inputted by the user among the printing apparatuses 21, 22, 23, and 24. That is, when the user wishes to perform a copy job with a A3 paper source, specifications of all the printing apparatuses 21, 22, 23, and 24 should be individually confirmed. Accordingly, it requires repeated operations and time.

FIG. 5B is a screen-shot view showing a user interface image 511 that distinguishingly displays a list 513 of printing apparatuses 21, 22, 23, and 24 that supports a printing option inputted by the user at the scanning apparatus 11 according to an embodiment of the present general inventive concept. However, the configuration of the user interface image 511 of FIG. 5B is an example, and thus, it will be understood by those skilled in the art that the user interface image 511 may be modified in various ways in consideration of an available atmosphere.

Referring to FIG. 5B, when the user selects a printing option and a mode through the user interface images 401 and 411 of FIGS. 4A and 4B, the scanning apparatus 11 distinguishingly displays the list 513 of all printing apparatuses (printers 2 and 3 of FIG. 5B) among the printing apparatuses 21, 22, 23, and 24 (printers 1, 2, 3, and 4 of FIG. 5A) through the user interface image 511. For example, the printing apparatuses (printers 2 and 3 of FIG. 5B) that support the printing option are actively displayed, and the other printing apparatuses (printers 1 and 4 of FIG. 5B) that do not support the printing option are inactively displayed. Here, the actively displayed printing apparatuses (printers 2 and 3 of FIG. 5B) may correspond to printing apparatuses that support the inputted printing option and are currently operable.

Accordingly, according to the user interface image 511 of FIG. 5B, unlike the user interface image 501 of FIG. 5A, the user may readily see the printing apparatuses that support the printing option inputted by the user. Therefore, the inconvenience of searching all of the printing apparatuses 21, 22, 23, and 24 (printers 1, 2, 3, and 4 of FIG. 5B) may be avoided.

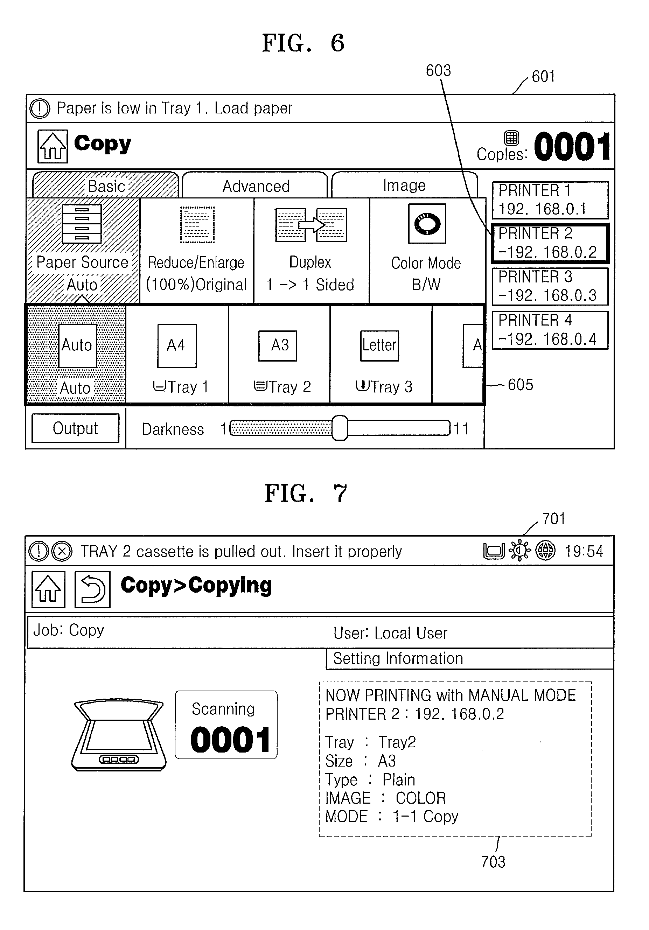

FIG. 6 is a screen-shot view showing a user interface image 601 for selecting a printing apparatus and a tray that supports a paper source that is wanted by the user at the scanning apparatus 11 according to an embodiment. However, the configuration of the user interface image 601 of FIG. 6 is an example, and thus, it will be understood by those skilled in the art that the user interface image 601 may be modified in various ways in consideration of an available atmosphere.

When, from the printers 2 and 3 (refer to FIG. 5B) that support the printing option (paper sources) described with reference to FIG. 5B, the printer 2 is selected by the user, the scanning apparatus 11 further displays tray information 605 included in the printer 2 (603) of a printing apparatus list is selected through the user interface image 601. That is, icons of tray 1, tray 2, tray 3, and tray 4 included in the printer 2 and Auto by which a tray is automatically selected are displayed on the user interface image 601.

According to the manual select mode described above, the user may perform a copy job by directly selecting the printing apparatus (for example, printer 2) and a tray (for example, Auto) respectively through the user interface image 511 of FIG. 5B and the user interface image 601 of FIG. 6.

FIG. 7 is a screen-shot view showing a user interface image 701 provided to the user when a copy job starts at the scanning apparatus 11 according to an embodiment.

However, the configuration of the user interface image 701 of FIG. 7 is an example, and thus, it will be understood by those skilled in the art that the configuration of the user interface image 701 may be modified in various ways in consideration of an available atmosphere.

Referring to FIG. 7, information 703 of a copy job that is currently performing, for example, information of the printing apparatus to be used for printing and printing option is displayed on the user interface image 701.

When a copy job begins with the manual select mode, the auto select mode, or the broadcast mode described above, the user may see information 703 about the current copy job through the user interface image 701 of FIG. 7.

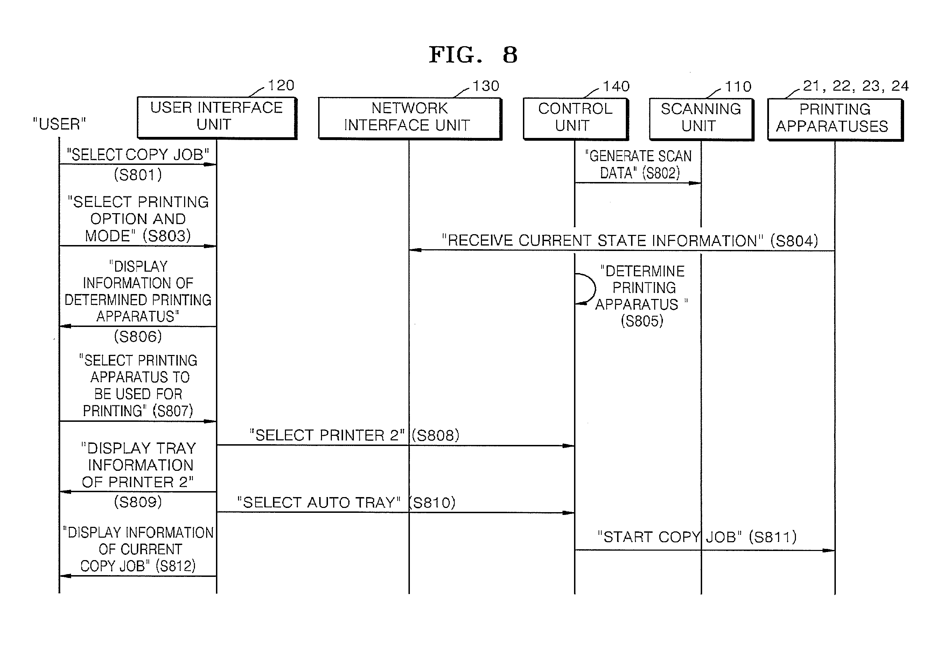

FIG. 8 is a diagram showing a process of performing a copy job according to the manual select mode of the scanning apparatus 11 according to an embodiment. Referring to FIG. 8, for the copy job to be performed in the scanning apparatus 11, it is assumed a case when the printing option of a paper source is set and the manual select mode is set by the user. However, although in a case when other printing option is set, it will be understood by those skilled in the art that the scanning apparatus 11 may be operated in the manual mode similar to the process described in FIG. 8.

In operation S801, the user interface unit 120 receives an input of the selection of a copy job by the user through the user interface image 301 (refer to FIG. 3).

In operation S802, the scanning unit 110 generates scan data by scanning a document placed on the scanning apparatus 11 by the user. At this point, the scanning unit 110 may perform the scanning operation under the control of the control unit 140.

In operation S803, the user interface unit 120 receives the selection of a printing option and a mode from the user through the user interface image 401 and 411 (refer to FIGS. 4A and 4B).

In the descriptions with reference to FIG. 8, it is assumed a case that the paper source is selected as a printing option and a manual select mode is selected as a printing mode, but the current embodiment is not limited thereto.

In operation S804, when a printing option is inputted, the network interface unit 130 receives current state information of the printing apparatuses 21, 22, 23, and 24 from the printing apparatuses 21, 22, 23, and 24 that are connected via the network 30. Here, the received state information includes information of operating states (for example, jam, toner empty, engine error, or door open, etc.) of the connected printing apparatuses 21, 22, 23, and 24 and information of supporting specification (for example, paper source, enlarge/reduce, duplex printing, or color/mono printing, etc.) of each of the printing apparatuses 21, 22, 23, and 24.

In operation S805, the control unit 140 determines at least one printing apparatus that supports the inputted printing option among the connected printing apparatuses 21, 22, 23, and 24 based on the received state information. For example, the control unit 140 may determine the printers 2 and 3 as in FIG. 5B among the connected printing apparatuses 21, 22, 23, and 24 (printers 1, 2, 3, and 4).

In operation S806, the user interface unit 120 provides a user interface image 511 (refer to FIG. 5B) on which the determined at least one printing apparatus is displayed. For example, the user interface unit 120 may actively display the printers 2 and 3, and may inactively display the remaining printers 1 and 4.

In operation S807, the user interface unit 120 receives an input of the selection of the printing apparatus for printing by the user through the user interface image 601 (refer to FIG. 6). For example, the user interface unit 120 may receive an input of the selection of the printer 2 (603 of FIG. 6) from the user.

In operation S808, the control unit 140 receives information from the user interface unit 120 that the printer 2 (603 of FIG. 6) is selected.

In operation S809, the user interface unit 120 displays tray information 605 of the printer 2 (603 of FIG. 6) selected through the user interface image 601 (refer to FIG. 6).

In operation S810, the control unit 140 receives information from the user interface unit 120 that the Auto tray of the printer 2 is selected. Also, another tray that supports the paper source inputted by the user may be selected.

In operation S811, the control unit 140 generates a control signal that is an order for the selected printer 2 (603 of FIG. 6) and the selected Auto tray to perform a copy job, and transmits the control signal to the selected printer 2 (603 of FIG. 6).

In operation S812, the user interface unit 120 provides information (703 of FIG. 7) of the currently performing copy job to the user through the user interface image 701 (refer to FIG. 7).

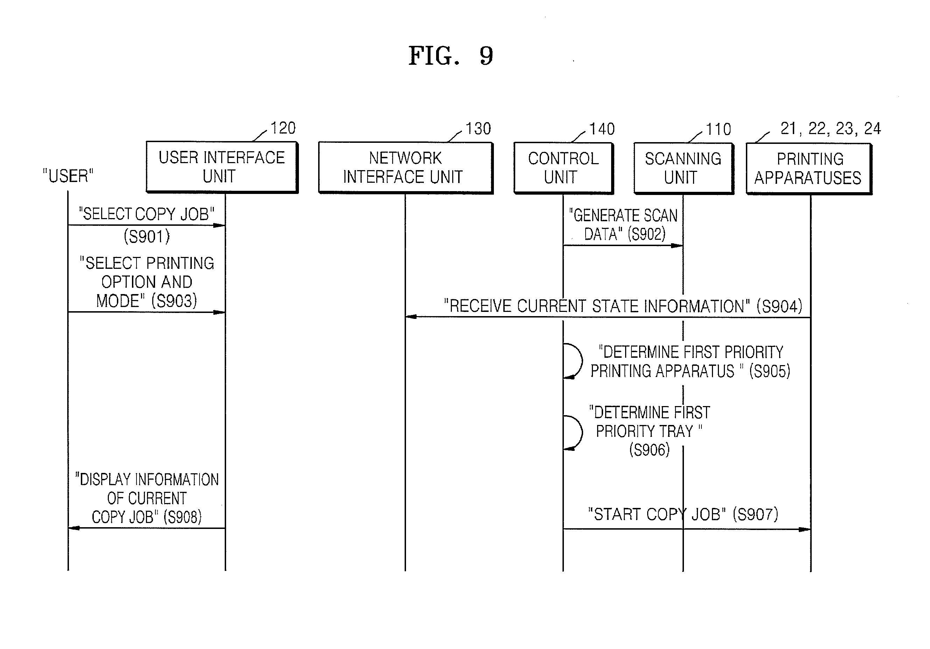

FIG. 9 is a diagram showing a process of performing a copy job according to an auto select mode of the scanning apparatus 11 according to an embodiment. Referring to FIG. 9, for a copy job to be performed at the scanning apparatus 11, it is assumed a case when a paper source is selected as a printing option and an auto select mode is selected by the user. However, it will be understood by those skilled in the art that, although another printing option is selected, the scanning apparatus 11 may be operated as the process described in FIG. 9 according the auto select mode.

In operation S901, the user interface unit 120 receives an input of the selection of a copy job from the user through the user interface image 301 (FIG. 3).

In operation S902, the scanning unit 110 generates scan data by scanning a document placed on the scanning apparatus 11 by the user. At this point, the scanning unit 110 may perform the scanning operation according to the control by the control unit 140.

In operation S903, the user interface unit 120 receives an input of the selection of a printing option and a mode from the user through the user interface image 401 and 411 (refer to FIGS. 4A and 4B).

In the descriptions with reference to FIG. 9, it is assumed a case that the paper source is selected as a printing option and an auto select mode is selected as a printing mode, but the current embodiment is not limited thereto.

In operation S904, when a printing option is inputted, the network interface unit 130 receives current state information of the printing apparatuses 21, 22, 23, and 24 from the printing apparatuses 21, 22, 23, and 24 that are connected via the network 30. Here, the received state information includes information of operating states (for example, jam, toner empty, engine error, or door open, etc.) of the connected printing apparatuses 21, 22, 23, and 24 and information of a supporting specification (for example, paper source, enlarge/reduce, duplex printing, or color/mono printing, etc.) of each of the printing apparatuses 21, 22, 23, and 24.

In operation S905, the control unit 140 determines the first priority printing apparatus that supports the inputted printing option among the connected printing apparatuses 21, 22, 23, and 24 based on the received state information. That is, according to the auto select mode of FIG. 9, not all of the printing apparatuses (for example, printers 2 and 3) that support the printing option (paper source) are selected, but the first priority one printer (for example, the printer 2 (603)) is determined. This is to automatically perform a copy job according to the auto select mode.

In this way, in order for the control unit 140 to determine one first priority printing apparatus (for example, printer 2 (603)), the order of priority of the printing apparatuses 21, 22, 23, and 24 should be set in advance. Accordingly, the order of priority of all or some of the printing apparatuses 21, 22, 23, and 24 may be set in advance and stored in a storage unit (not shown) of the scanning apparatus 11 according to the input by the user.

In operation S906, the control unit 140 determines the first tray of trays included in the first priority printer 2 (603). That is, according to the auto select mode of FIG. 9, information of the tray to be used in the selected printer 2 is not received from the user, but the one first priority tray is determined (for example, Auto). This is to automatically perform a copy job according to the auto select mode.

In this way, in order for the control unit 140 to determine the one first priority tray (for example, Auto), the order of priority of the trays included in each of the printing apparatuses 21, 22, 23, and 24 should be set in advance. Accordingly, the order of priority of trays included in all or some of the printing apparatuses 21, 22, 23, and 24 that exist in the image forming system 1 may be set in advance and stored in a storage unit (not shown) of the scanning apparatus 11 according to the input by the user.

In operation S907, the control unit 140 generates a control signal that is a command for the automatically selected printer 2 (603 of FIG. 6) and the automatically determined Auto tray to perform a copy job, and transmits the control signal to the selected printer 2 (603 of FIG. 6). Accordingly, a copy job may be performed according to the control signal at the Auto tray of the determined printing apparatus that is the printer 2 (603 of FIG. 6).

In operation S908, the user interface unit 120 provides information (703 of FIG. 7) of the currently performing copy job to the user through the user interface image 701 (refer to FIG. 7).

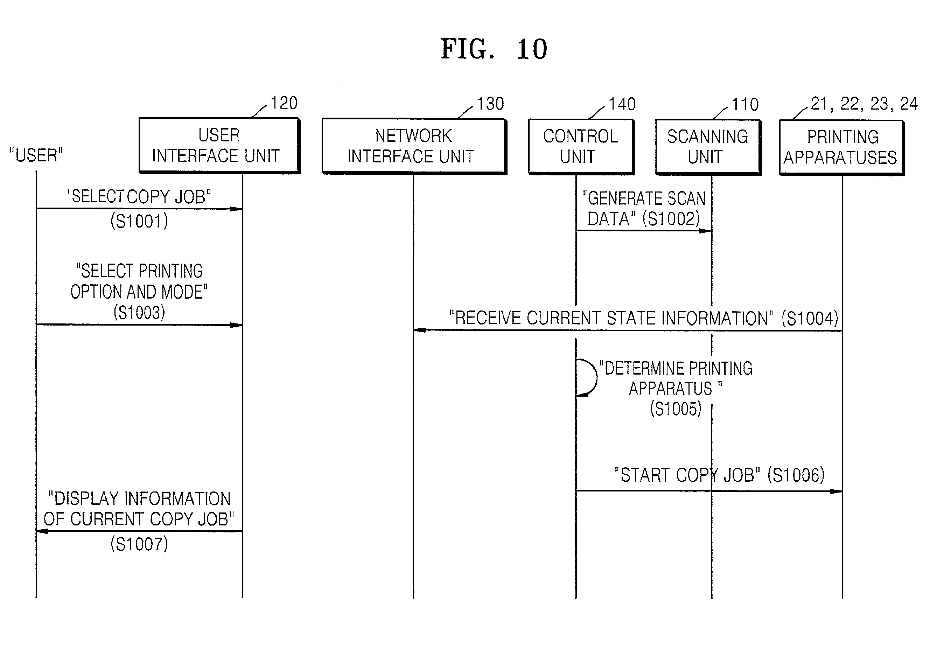

FIG. 10 is a diagram showing a process of performing a copy job according to the broadcast mode of a scanning apparatus 11 according to an embodiment. Referring to FIG. 10, for a copy job to be performed at the scanning apparatus 11, it is assumed a case when a paper source is selected as a printing option and a broadcast mode is selected by the user. However, it will be understood by those skilled in the art that, although another printing option is selected, the scanning apparatus 11 may be operated as the process described in FIG. 10 at the broadcast mode.

In operation S1001, the user interface unit 120 receives an input of the selection of a copy job from the user through the user interface image 301 (FIG. 3).

In operation S1002, the scanning unit 110 generates scan data by scanning a document placed on the scanning apparatus 11 by the user. At this point, the scanning unit 110 may perform the scanning operation under the control of the control unit 140.

In operation S1003, the user interface unit 120 receives an input of the selection of a printing option and a printing mode from the user through the user interface images 401 and 411 (refer to FIGS. 4A and 4B).

In the descriptions with reference to FIG. 10, it is assumed a case that the paper source is selected as a printing option and a broadcast mode is selected as a mode, but the current embodiment is not limited thereto.

In operation S1004, when a printing option is inputted, the network interface unit 130 receives current state information of the connected printing apparatuses 21, 22, 23, and 24 from the printing apparatuses 21, 22, 23, and 24 that are connected via the network 30. Here, the received state information includes information of operating states (for example, jam, toner empty, engine error, or door open, etc.) of the connected printing apparatuses 21, 22, 23, and 24 and information of supporting specifications (for example, paper source, enlarge/reduce, duplex printing, or color/mono printing, etc) of each of the printing apparatuses 21, 22, 23, and 24.

In operation S1005, the control unit 140 determines at least one printing apparatus that supports the inputted printing option (paper source) among the connected printing apparatuses 21, 22, 23, and 24 based on the received state information. Here, the determined printing apparatus may correspond to a printing apparatus that supports the inputted printing option and is currently able to print.

That is, according to the broadcast mode of FIG. 10, printing apparatuses (for example, printers 2 and 3) that support the printing option (paper source) and are able to print may be determined.

In operation S1006, the control unit 140 generates a control signal that is a command for the determined printing apparatuses (for example, printers 2 and 3) to automatically perform a copy job, and transmits the control signal to the determined printing apparatuses (for example, printers 2 and 3). Accordingly, a copy job may be performed all of the determined printing apparatuses (for example, printers 2 and 3) according to the control signal.

In operation S1007, the user interface unit 120 provides information (703 of FIG. 7) of the currently performing copy job to the user through the user interface image 701 (refer to FIG. 7).

Referring to the drawings described above, when a copy job is performed in the scanning apparatus 11 according to the current embodiment, the user may print at a specific desired printer and may readily see a printing apparatus that supports the desired option and the detailed specification thereof. Accordingly, the user may readily perform a copy job without repeatedly performing unnecessary operations. Furthermore, the user may rapidly and automatically perform a copy job at a desired printing apparatus that supports desired printing options.

FIG. 11 is a flowchart view showing a method of performing a copy job by using the scanning apparatus 11 according to an embodiment. Referring to FIG. 11, the method of performing a copy job according to the current embodiment includes operations that are performed in a time-series in the image forming system 1 of FIG. 1, in particular, at the scanning apparatus 11 of FIG. 2. Here, although some contents described above with reference to FIGS. 1 and 2 are omitted in the following descriptions, the relevant descriptions of FIGS. 1 and 2 are applied to the method of performing a copy job according to the current embodiment.

In operation S1101, the user interface unit 120 receives an input of a printing option about scan data through a user interface image.

In operation S1102, when the printing option is inputted, the network interface unit 130 receives current state information of the connected printing apparatuses 21, 22, 23, and 24 from the printing apparatuses 21, 22, 23, and 24 that are connected through the network 30.

In operation S1103, the control unit 140 determines at least one printing apparatus that supports the inputted printing option among the connected printing apparatuses 21, 22, 23, and 24 based on the received state information.

In operation S1104, the user interface unit 120 provides a user interface image in which the determined at least one printing apparatus is distinguishingly displayed.

The embodiments can be written as computer programs and can be implemented in general-use digital computers that execute the programs using a computer readable recording medium. Also, the data structure used in the embodiments may be recorded in a computer readable recording medium through various ways. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

While this invention has been particularly shown and described with reference to preferred embodiments thereof, it will be understood by those of ordinary skill in the art that various changes in form and details may be made therein without departing from the invention as defined by the appended claims. The preferred embodiments should be considered in descriptive sense only and not for purposes of limitation. Therefore, the scope of the invention is defined not by the detailed description of the invention but by the appended claims, and all differences within the claim scope will be construed as being included in the present invention.

## Claims

1. A scanning apparatus having a function of a copy job, comprising:
a scanning unit to scan a document to generate scan data;
a user interface unit to receive an input of a printing option with respect to the scan data through a user interface screen;
a network interface unit to receive current state information of printing apparatuses from the printing apparatuses connected via a network when the printing option is inputted; and
a control unit to determine at least one printing apparatus that supports the inputted printing option among from the connected printing apparatuses based on the received state information,
wherein the user interface unit provides the user interface screen in which the determined at least one printing apparatus is distinguishingly displayed.

2. The scanning apparatus of claim 1, wherein the scanning apparatus is a part of an image forming system in which at least one printing apparatus and at least one scanning apparatus are connected via a network.

3. The scanning apparatus of claim 1 or claim 2, wherein the control unit determines a currently printable printing apparatus while supporting the inputted printing option based on the received state information.

4. The scanning apparatus of any one of the preceding claims, wherein the received state information is information about operation states of each of the connected printing apparatuses and information about supporting specifications of each of the connected printing apparatuses.

5. The scanning apparatus of any one of the preceding claims, wherein the scanning apparatus supports a scan job that scans the document by using the scanning unit and a copy job that prints the scan data by using the connected printing apparatuses.

6. The scanning apparatus of any one of the preceding claims, wherein, when a manual select mode is set, the user interface unit receives an input of a user selection with respect to one printing apparatus to be used to print the scan data among from the determined at least one printing apparatuses.

7. The scanning apparatus of claim 6, wherein, when the inputted printing option is a paper source, the user interface unit displays current state information of trays included in the printing apparatus to be used for printing on the user interface screen.

8. The scanning apparatus of any one of the preceding claims, wherein, when an auto select mode is set, the control unit generates a control signal that is a command for a first priority printing apparatus to perform the copy job according to the inputted printing option based on a priority sequence set in advance according to the printing options.

9. The scanning apparatus of claim 8, wherein, when the inputted printing option is a paper source, the control unit generates a control signal that is a command for a first priority tray of the first priority printing apparatus to perform the copy job.

10. The scanning apparatus of any one of the preceding claims, wherein, when a broadcast mode is set, the control unit generates a control signal that is a command for all of the determined printing apparatuses to perform the copy job according to the inputted printing option.

11. An image forming system comprising:
a plurality of printing apparatuses each having a function of printing scan data;
and
at least one scanning apparatus connected to the printing apparatuses via a network,
wherein the at least one scanning apparatus comprises:
a scanning unit to scan a document to generate scan data;
a user interface unit to receive an input of a printing option with respect to the scan data through a user interface screen;
a network interface unit to receive current state information of the printing apparatuses from the printing apparatuses connected via the network when the printing option is inputted; and
a control unit to determine at least one printing apparatus that supports the inputted printing option among from the connected printing apparatuses based on the received state information,
wherein the user interface unit provides the user interface screen in which the determined at least one printing apparatus is distinguishingly displayed.

12. A method of performing a copy job by using a scanning apparatus, the method comprising:
receiving an input of a printing option with respect to scan data through a user interface screen;
receiving current state information of printing apparatuses from the printing apparatuses that are connected via a network when the printing option is inputted;
determining at least one printing apparatus that supports the inputted printing option among from the printing apparatuses connected via the network based on the received state information; and
providing the user interface screen on which the determined at least one printing apparatus is distinguishingly displayed.

13. The method of claim 12, further comprising:
receiving an input of a printing apparatus to be used to print of the determined at least one of printing apparatuses when the inputted printing option is a paper source in a manual select mode; and
displaying current state information about trays included in the printing apparatus to be used to print according to the inputted printing option on the user interface screen.

14. The method of claim 12, further comprising, when the inputted printing option is a paper source in an auto select mode,
generating a control signal that is a command for a first priority tray of a first priority printing apparatus to perform a copy job.

15. The method of any one of claims 12 to 14, further comprising, when a broadcast mode is set, generating a control signal that is a command for all of the determined at least one of printing apparatuses to perform the copy job according to the inputted printing option.
